# EUROPEAN PATENT SPECIFICATION

(11) **EP 2 849 887 B1**
(45) Date of publication and mention of the grant of the patent: **20.03.2024**
(21) Application number: 13790097.3
(22) Date of filing: 01.05.2013
(51) Int. Cl.: B02C 17/20, B82Y 30/00, C04B 35/626, C09D 1/00, B82Y 40/00, H01G 11/36, H01G 11/86, H01B 1/04, H01M 4/13, H01M 4/36, H01G 11/46

(54) **PROCESS OF DRY MILLING PARTICULATE MATERIALS**
VERFAHREN ZUM TROCKENmahlung TEILCHENFÖRMIGER MATERIALIEN
PROCÉDÉ DE BROYAGE À SEC DE MATÉRIAUX PARTICULAIRES

(30) Priority: 18.05.2012 US 201213474860
(43) Date of publication of application: 25.03.2015
(73) Proprietor: Do, Inhwan, East Lansing, MI 48823 (US); Knox, Michael, R., East Lansing, MI 48823 (US); Murray, Scott, L., East Lansing, MI 48823 (US); Privette, Robert, M., East Lansing, MI 48823 (US)
(72) Inventor: Do, Inhwan, East Lansing, MI 48823 (US); Knox, Michael, R., East Lansing, MI 48823 (US); Murray, Scott, L., East Lansing, MI 48823 (US); Privette, Robert, M., East Lansing, MI 48823 (US)
(74) Representative: Elkington and Fife LLP
(86) International application number: PCT/US2013/038967
(87) International publication number: WO 2013/173053

(56) References cited:
- EP-A1- 2 275 385
- WO-A1-2009/127901
- WO-A1-2010/036648
- CN-A- 102 214 817
- US-A1- 2002 134 964
- US-A1- 2004 137 327
- US-A1- 2007 077 490
- US-A1- 2008 145 293
- US-A1- 2009 117 467
- US-A1- 2010 081 057
- Zhongxue Chen ET AL: "In Situ Generation of Few-Layer Graphene Coatings on SnO2-SiC Core-Shell Nanoparticles for High-Performance Lithium-Ion Storage", ADVANCED ENERGY MATERIALS, vol. 2, no. 1, 16 November 2011 (2011-11-16), pages 95-102, XP055369206, DE ISSN: 1614-6832, DOI: 10.1002/aenm.201100464
- Weifeng Zhao ET AL: "Preparation of graphene by exfoliation of graphite using wet ball milling", Journal of Materials Chemistry, vol. 20, no. 28, 1 January 2010 (2010-01-01), page 5817, XP055133676, ISSN: 0959-9428, DOI: 10.1039/c0jm01354d

## Description

the following of which is a specification therefor.

### BACKGROUND OF THE INVENTION

This invention deals with graphene platelet nano composites with silicon. The composited particles are useful as electrodes and for electrical applications.

Graphite is formed by many layers of carbon in highly structured platelets. These platelets, when separated from the graphite superstructure, are collectively called graphene. Graphene has interesting chemical, physical, and electrical properties. These properties make graphene a highly valued product. The quality of the graphene, as defined by particle diameter, particle width, and surface area, determine its industrial utility. It is advantageous to coat or composite graphene with metal particles for electrical applications.

Xg Sciences, Inc. headquartered in Lansing, Michigan produces a "C" grade graphene by a high energy, plastic media, dry, mechanical milling process. Grade size characteristics make it uniquely suited to coating or mixing with nanoparticles to form useful materials for electrodes.

The applicant is aware of U.S. Patent publication 2011/0111303 A1 that published on may 12, 2011 as showing a wet process for treating graphene with silicon.

Also, the patentees are aware of EP2275385 in the name of Peukert, et al in which a wet process is set forth for grinding particulate materials, wherein the grinding media is yttrium stabilized zirconia.

WO 2009/127901 describes a lithium metal phosphate/carbon nanocomposite as cathode material for rechargeable electrochemical cells with the general formula LixMlyM21_yPO4/C where Ml is Fe, Mn, Co, Ni, VF and M2 is Fe, Mn, Co, Ni, VF, Mg, Ca, Al, B, Cr, Zn, Cu, Nb, Zr, V, Ti and x = 0.8-1.0 and y = 0.5-1.0, with a carbon content of 0.5 to 20% by weight.

US 2009/0117467 describes a nano-scaled graphene platelet-based composite material composition for use as an electrode, particularly as an anode of a lithium ion battery. The composition comprises: (a) micron- or nanometer-scaled particles or coating which are capable of absorbing and desorbing lithium ions; and (b) a plurality of nano-scaled graphene platelets (NGPs), wherein a platelet comprises a graphene sheet or a stack of graphene sheets having a platelet thickness less than 100 nm; wherein at least one of the particles or coating is physically attached or chemically bonded to at least one of the graphene platelets and the amount of platelets is in the range of 2% to 90% by weight and the amount of particles or coating in the range of 98% to 10% by weight. Also described is a lithium secondary battery comprising such a negative electrode (anode).

Zhongxue Chen et al. "In Situ Generation of Few-Layer Graphene Coatings on SnO2-SiC Core-Shell Nanoparticles for High-Performance Lithium-Ion Storage"; Advanced Energy Materials; Vol.2, no.1, 2001-11-16, pgs 95-102 discloses a simple-ball milling method to synthesize a tin oxide-silicon carbide/few-layer graphene core-shell structure in which nanometer-sized SnO₂ particles are uniformly dispersed on a supporting SiC core and encapsulated with few-layer graphene coatings by in situ mechanical peeling.

Weifeng Zhao et al. "Preparation of graphene by exfoliation of graphite using wet ball milling"; J. Mater.Chem. 2010, 20, 5817-5819, discloses wet ball milling to exfoliate graphite platelets into graphene in a liquid medium.

CN 102 214 817 describes a carbon/silicon/carbon nano composite structure cathode material and a preparation method thereof, belonging to the technical field of electrochemical power supply technologies.

EP 2 275 385 describes a method of producing from particles of a layered material platelets comprising the layered material, wherein the particles are exposed to a mechanical grinding treatment using grinding media, the stress energy of the grinding media SF GM being smaller than 10 µNm. It also describes a method of producing from particles of a layered material platelets comprising the layered material, wherein the particles are exposed to a mechanical grinding treatment, thereby exfoliating at least some of the particles of the layered material to produce platelets of the layered material, at least some of the platelets thus generated being less than 4 nm thick.

### SUMMARY OF THE INVENTION

Graphene produced by media ball milling has very small particle size with a relatively high surface area. It is uniquely suited to make nano-composites or coatings by coating or admixing other particles. Metals or metal oxides can be coated or formed into composites with the high surface area, relatively low aspect ratio graphene. It is believed by the inventors herein that the materials of this invention have unique aspect ratios. Ground graphite admixed with silicon has an aspect ratio fairly close to 1, graphene from a GO process, epitaxially grown graphene, or graphene from an intercalated - heating process has a very high aspect ratio. The moderate aspect ratio graphene of this invention better coats 1 to 4 micron particles and better mixes with even small nanoparticles.

Based on Raman spectroscopy with the aspect ratio, particle size, and/or surface area, provides graphene in this invention that is unique.

Based on the following table calculated from Raman Spectroscopy and measuring peak height, generated the following table.

| m²/g | G | D | G/D | Gpeak |
|---|---|---|---|---|
| 250 | 50 | 5 | 10 | 1580 |
| 400 | 19 | 6 | 3.2 | |
| 500 | 21 | 7 | 3 | |
| 600 | 16 | 6 | 2.7 | 1585 |

Native graphite has a very high G/D ratio. Graphite ground to amorphous powder has the G/D ratio. the material of the instant invention starts high and tends toward 2 the more the material is processed. Amorphous graphite also has a G peak red shift to 2000 cm⁻¹. The material of the instant invention may have a small red shift, but from the quality of the data it is hard to determine. The very high surface area and aspect ratio confirms it is largely graphene nano-platelets.

Mechanically exfoliated graphene is distinct from ground graphite, in that, it maintains the strong crystalline sp2 structure. As graphite is ground to amorphous, the ratio of G to D Raman lines tends to 2 and the G line red shifts from 1560 cm⁻¹ to 2000 cm⁻¹. The G peak is referred to as the graphene peak. The D peak referred to as the Disorder peak. The more graphite is ground, the more the G peak is reduced and the D peak is increased.

If the added particles are larger than the graphene, they are coated with graphene, and if they are about the same approximate size, a nano-composite forms. The nanocomposites are useful for producing electrodes, especially for battery and capacitor applications.

### BRIEF DESCRIPTION OF THE DRAWINGS

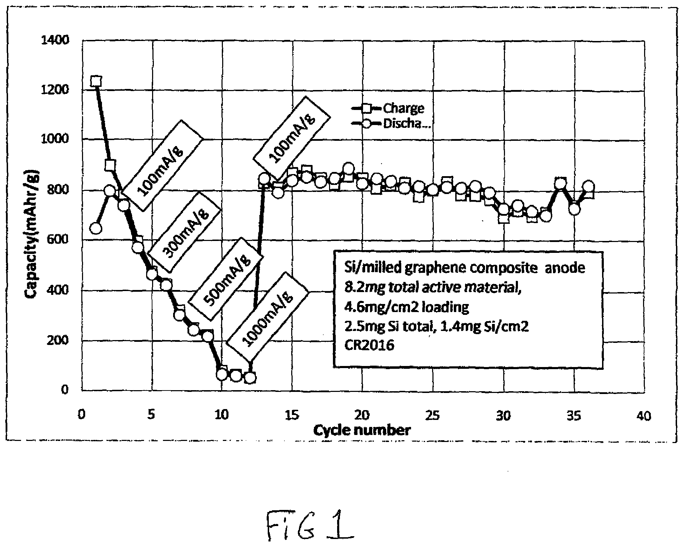

Figure 1 is a graph of battery performance of a Si/graphene (200-250 m²/g, 100 minutes processing time).

### THE INVENTION

Thus, in the present invention, there is a process of dry milling particulate materials, the process comprising: dry milling the particulate materials with a plastic milling media having a hardness on the Brinell Scale in the range of 3 to 100; wherein at least one of the particulate materials is a layered material of graphite, in the presence of a non-layered material of silicon; wherein the milling media has a surface energy equivalent to the surface energy of the layered material; wherein the dry milling exfoliates the layered material to obtain an exfoliated material of graphene having a particle size of 10 microns to 5 nm thick, or less, and an aspect ratio of from 5 to 200; and wherein the dry milling composites the non-layered material with the exfoliated material.

The exfoliated material has a particle size of 10 microns by 5 nm thick, or less. In addition, the dry milling is controlled by controlling the surface energy of the milling media in addition to controlling the hardness of the milling media.

### DETAILED DESCRIPTION OF THE INVENTION

The graphene produced by the methods of this invention has a relatively narrow aspect ratio, greater than graphite. For this invention aspect ratios above 5 and below 200 are part of the invention and preferred are aspect ratios above 10 and below 25.

The small, that is, 1 to 5 nanometers thick, and 50 to 100 nanometers diameter, high surface area (above 500 BET), medium aspect ratio graphene, is a unique size for coating with small metal or metal oxide particles.

The metal used in this invention is the metalloid silicon. Other useful metals are the the metals tin, iron, magnesium, manganese, aluminum, lead, gold, silver, titanium, platinum, palladium, ruthenium, copper, nickel, rhodium, and alloys of any of the above.

The plastic milling media used in this invention has a hardness on the Brinell Scale in the range of 3 to 100. The plastic milling media is selected from the group consisting essentially of polyacetals, polyacrylates, such as, for example, methylmethacrylate, polycarbonate, polystyrene, poly- propylene, polyethylene, polytetrafluoroethylene, polyethylene- imide, polyvinylchloride, polyamine-imide, phenolics and formaldehyde-based thermosetting resins, and alloys of any of the plastics named.

Useful particulate metal oxides aremetal oxides selected from silicon, tin, iron, magnesium, manganese, aluminum, lead, gold, silver, titanium, platinum, palladium, ruthenium, copper, nickel, rhodium, tungsten, cobalt, molybdenum, and alloys of any the above named metal oxides, wherein the metal and metal oxide particles have a size of 100 microns or less. Preferred are particle sizes of 10 microns or less, and most preferred are particle sizes of 5 microns or less.

Metal carbides, metal nitrides are useful in this invention, as well as non-layered materials.

Graphene useful in this invention has a thickness of 5 nm or less.

### Examples

### Example 1

Two grams of natural graphite and 1 g of micron sized Si (1 to 4 um) were loaded into a 65 ml stainless steel grinding container and milled in the presence of 24 g of polymethylmethacrylate balls. The polymethylmethacrylate balls consisted of two different sizes, namely, 1/4 inches and 3/8 inches in diameter. The high energy milling machine was operated at < 1500 rpm and its clamp speed was 1060 cycle/min. The polymethylmethacrylate balls can be replaced with polycarbonate, polystyrene, polypropylene, polyethylene, polytetrafluoroethylene, polyethyleneimide, polyvinylchloride and polyamide-imide to control milling efficiency, graphene size, porosity distribution and surface area at a fixed milling time, contact quality between Si and graphene surface. The surface area of the Si/graphene composite produced can be varied from 100m²/g to 700m²/g depending on milling time (60 to 500 min.) and Si/graphene composition and type of ball materials.

The result for the battery performance of a Si/graphene (200 to 250 m²/g, 100 min. processing) sample as an anode for a lithium ion battery is plotted *infra.* The Si/graphene shows high capacity (>800 mAh/g, electrode loading) over 35 cycles at 100 mA/g, which supports the low cost, simple, time-saving, environmentally benign, flexible way to produce high performance graphene-based composite materials for energy applications. Some fluctuation of the capacity is due to the variation of temperature.

### Reference Example 2

Two grams of natural graphite and 1 g of nano sized metal oxides (Fe₂O₃, NiO, CoOs, MnO₃) were loaded in a 65 ml stainless steel grinding container and milled in the presence of 24 g of polymethylmethyacrylate balls. The products can be used as anode materials for lithium batteries and electrodes for supercapacitors.

## Claims

1. A process of dry milling particulate materials, the process comprising:
dry milling the particulate materials with a plastic milling media having a hardness on the Brinell Scale in the range of 3 to 100;
wherein at least one of the particulate materials is a layered material of graphite, in the presence of a non-layered material of silicon;
wherein the milling media has a surface energy equivalent to the surface energy of the layered material;
wherein the dry milling exfoliates the layered material to obtain an exfoliated material of graphene having a particle size of 10 microns by 5 nm thick, or less, and an aspect ratio of from 5 to 200;
and wherein the dry milling composites the non-layered material with the exfoliated material.

2. The process as claimed in claim 1 wherein the exfoliated material has an aspect ratio of greater than about 25;
or
wherein the exfoliated material has a size in the range of from 50 nm to 10 microns;
or
wherein the exfoliated material has a thickness of from 1 nm to 5 nm.

3. The process as claimed in claim 1 wherein the plastic is selected from the group consisting of:
i. polymethylmethacrylate,
ii. polycarbonate,
iii. polystyrene,
iv. polypropylene,
v. polyethylene,
vi. polytetrafluoroethylene,
vii. polyethyleneimide,
viii. polyvinylchloride,
ix. polyamine-imide, and,
x. alloys of any of i. to ix.

4. The process as claimed in claim 1 wherein the particulate non-layered material has a size less than 100 microns.

## Patentansprüche

1. Verfahren zum Trockenmahlen von teilchenförmigen Materialien, wobei das Verfahren Folgendes umfasst:
Trockenmahlen der teilchenförmigen Materialien mit einem Kunststoffmahlmedium mit einer Härte auf der Brinell-Skala in dem Bereich von 3 bis 100;
wobei zumindest eines der teilchenförmigen Materialien ein geschichtetes Material aus Graphit in der Gegenwart eines nicht geschichteten Materials aus Silizium ist;
wobei das Mahlmedium eine Oberflächenenergie äquivalent zu der Oberflächenenergie des geschichteten Materials aufweist;
wobei das Trockenmahlen das geschichtete Material abblättert, um ein abgeblättertes Material aus Graphen mit einer Teilchengröße von 10 Mikrometern mal 5 nm Dicke oder weniger und einem Seitenverhältnis von 5 bis 200 zu erhalten;
und wobei das Trockenmahlen das nicht geschichtete Material mit dem abgeblätterten Material verbindet.

2. Verfahren nach Anspruch 1, wobei das abgeblätterte Material ein Seitenverhältnis von mehr als etwa 25 aufweist;
oder
wobei das abgeblätterte Material eine Größe in dem Bereich von 50 nm bis 10 Mikrometern aufweist;
oder
wobei das abgeblätterte Material eine Dicke von 1 nm bis 5 nm aufweist.

3. Verfahren nach Anspruch 1, wobei der Kunststoff ausgewählt ist aus der Gruppe bestehend aus:
i. Polymethylmethacrylat,
ii. Polycarbonat,
iii. Polystyrol,
iv. Polypropylen,
v. Polyethylen,
vi. Polytetrafluorethylen,
vii. Polyethylenimid,
viii. Polyvinylchlorid,
ix. Polyaminimid, und
x. Legierungen von einem beliebigen von i. bis ix.

4. Verfahren nach Anspruch 1, wobei das teilchenförmige nicht geschichtete Material eine Größe von weniger als 100 Mikrometern aufweist.

## Revendications

1. Procédé de broyage à sec de matériaux particulaires, le procédé comprenant :
le broyage à sec des matériaux particulaires avec un agent de broyage en plastique comportant une dureté sur l'échelle Brinell dans la gamme de 3 à 100 ;
dans lequel au moins l'un des matériaux particulaires est un matériau stratifié de graphite, en présence d'un matériau non stratifié de silicium ;
dans lequel l'agent de broyage comporte une énergie de surface équivalente à l'énergie de surface du matériau stratifié ;
dans lequel le broyage à sec exfolie le matériau stratifié pour procurer un matériau exfolié de graphène comportant une taille de particule de 10 microns sur 5 nm d'épaisseur ou moins, et un rapport de forme de 5 à 200 ;
et dans lequel le broyage à sec forme un composite du matériau non stratifié avec le matériau exfolié.

2. Procédé selon la revendication 1, dans lequel le matériau exfolié comporte un rapport de forme supérieur à environ 25 ;
ou
dans lequel le matériau exfolié comporte une taille dans la gamme de 50 nm à 10 microns ;
ou
dans lequel le matériau exfolié comporte une épaisseur de 1 nm à 5 nm.

3. Procédé selon la revendication 1, dans lequel le plastique est sélectionné dans le groupe constitué de :
i. polyméthacrylate de méthyle,
ii. polycarbonate,
iii. polystyrène,
iv. polypropylène,
v. polyéthylène,
vi. polytétrafluoroéthylène,
vii. polyéthylèneimide,
viii. chlorure de polyvinyle,
ix. polyamine-imide, et
x. des alliages d'éléments quelconques de i à ix.

4. Procédé selon la revendication 1, dans lequel le matériau particulaire non stratifié comporte une taille de moins de 100 microns.
